# FASCICULE DE BREVET EUROPEEN

(11) **EP 0 402 199 B1**
(45) Date de publication et mention de la délivrance du brevet: **20.09.1995**
(21) Numéro de dépôt: 90401442.0
(22) Date de dépôt: 30.05.1990
(51) Int. Cl.: F16L 47/02, B29D 23/00, B29C 70/00, B29C 65/34

(54) **Procédé de fabrication de manchon électro-soudable, dispositif pour la mise en oeuvre de celui-ci et manchons obtenus selon ce procédé**
Elektro-Schweissmuffe sowie Verfahren und Vorrichtung zu deren Herstellung
Process and apparatus for making an electro-fuseble sleeve and sleeves made thereby

(30) Priorité: 09.06.1989 FR 8907647
(43) Date de publication de la demande: 12.12.1990
(73) Titulaire: BOULET-D'AURIA, TERLIZZI & CIE, MC-98000 Monaco (MC); GAZ DE FRANCE, 75017 Paris (FR)
(72) Inventeur: Boulet d'Auria, Vincent Stanislas, F-06320 Cap d'Ail (FR)
(74) Mandataire: Keib, Gérard

(56) Documents cités:
- EP-A- 0 002 799
- EP-A- 0 055 891
- EP-A- 0 086 359
- EP-A- 0 119 738
- EP-A- 0 262 735
- EP-A- 0 303 909
- WO-A-82/00699
- CH-A- 483 771
- FR-A- 2 186 114
- FR-A- 2 353 381
- JP-A- 1 206 026
- NL-C- 96 071

## Description

La présente invention concerne un procédé de fabrication de manchons électro-soudables, un dispositif pour la mise en oeuvre de celui-ci et les utilisations préférées du manchon ainsi réalisé.

Les manchons électro-soudables sont notamment destinés à former un raccord d'éléments tubulaires en matière plastique, tels, par exemple les canalisations de distribution de gaz ou d'eau réalisées en général en polyéthylène.

La technique d'électro-soudage consiste à chauffer une surface de contact des pièces, grâce à un fil chauffant noyé dans la pièce de raccordement et formant une résistance électrique, afin d'atteindre la température de soudage des matériaux.

La technique la plus couramment utilisée pour former de tels raccords est le surmoulage par injection. Le fil chauffant est mis en place dans une bobine, laquelle est surmoulée pour former la pièce de raccordement. Ainsi le fil est relativement proche de la surface intérieure de l'élément. Pour obtenir une bonne qualité de soudure, il est en effet souhaitable que le fil soit le plus près possible de cette surface intérieure de contact.

Pour fabriquer un manchon d'électro-soudage, il est connu de la demande de brevet français FR-B-2.221.679 (STURM VON ROLL AG) de réaliser une rainure à la surface extérieure d'un manchon en matière plastique et d'enrouler sur le manchon dans la rainure ainsi obtenue le fil à résistance, par tension. Après sa finition, le manchon est élargi au moyen d'un mandrin d'écartement et de ce fait, le fil chauffant subit une contrainte longitudinale de traction additionnelle. Le manchon est ensuite entouré par un élément de manchon extérieur dans un moule d'injection.

L'inconvénient principal d'un procédé de ce type est le problème du risque de déplacement et de détente du fil chauffant avant et pendant le surmoulage.

En effet, le fil avant surmoulage n'est retenu en place que par sa tension à la surface de la bobine. Or il peut se produire une imperfection de cette tension, par exemple à cause d'une erreur de l'opérateur lors de l'enbobinage ou lors du stockage à cause d'une variation du diamètre du manchon dûe aux conditions atmosphériques ambiantes, en particulier d'une humidité trop importante.

De plus, la tension à appliquer au fil, lors de son enroulement sur le manchon rainuré, est difficile à régler. En effet, il faut que le fil soit fermement tendu pour être logé de façon sûre dans le fond de la rainure hélicoïdale. Ceci étant, il ne faut pas que le fil soit surtendu, car, dans ce cas, son diamètre diminue et la résistivité finalement obtenue est supérieure à celle souhaitée, ce qui présente des inconvénients lors de l'électro-soudage.

Durant le surmoulage, le fil peut également être déplacé à cause des efforts dus à la viscosité de la matière plastique de surmoulage.

Ces éventuels déplacements nuisent à la qualité de la soudure, entraînant une dispersion thermique non homogène. Ils risquent de plus d'entraîner la création de poches d'air dans la pièce de raccord, qui sont également préjudiciables pour la soudure.

Par ailleurs, selon un tel procédé, une distance minimale entre le fil et la surface intérieure du manchon ne peut bien évidemment être dépassée et il est donc notamment impossible de faire tangenter le fil à la surface intérieure du manchon.

Enfin, avec de tels manchons, le stockage est problématique, puisque le fil et la rainure du manchon restent à l'air ambiant de l'atelier et qu'une contamination par l'air pollué et un encrassement par les poussières ou analogues entraînent la nécessité de leur nettoyage, avant la réalisation du surmoulage.

Le brevet européen EP-A-303 909 (GLYNWED TUBES AND FITTINGS LIMITED) propose un procédé de fabrication d'un raccord électro-soudable selon lequel un fil chauffé est enroulé sur un manchon. La température du fil provoque un ramollissement de la matière plastique à proximité du fil. Un galet presseur transmet au fil une pression suffisante pour l'enrober dans la matière plastique, le fil étant finalement totalement recouvert de matière plastique. Le raccord est ensuite obtenu par surmoulage de façon classique de ce manchon.

Ce procédé présente plusieurs inconvénients.

Le guidage du fil à la surface du manchon selon une hélice ne peut y être réalisé que par translation du manchon ou de la tête de chauffage, durant la rotation du manchon. Or, une mauvaise tension du fil ou un mauvais réglage des outils peut entraîner une variation non souhaitée du pas de l'hélice, ce qui nuit à l'homogénéité de la soudure et crée un risque de court-circuit.

Par ailleurs, le fil chauffant est mis en place à proximité de la surface extérieure du manchon et peut même l'affleurer. Or, comme il a été précisé plus haut, c'est au niveau de la surface intérieure du manchon, que la matière plastique du manchon et des éléments tubulaires à relier doit être chauffée pour réaliser la soudure de façon optimale.

Enfin, la fiabilité de ce procédé est incertaine. Le galet presseur ne rabat la matière plastique sur le fil que dans une mesure limitée et des irrégularités d'ancrage du fil et même éventuellement une absence d'ancrage à certains emplacements de la surface du manchon peuvent se présenter.

De façon générale, les procédés décrits dans ces deux documents antérieurs nécessitent systématiquement le surmoulage du manchon pour réaliser le raccord électro-soudable. En effet, dans ces deux cas, sans surmoulage, le chauffage du fil entraînerait une destruction du manchon, à cause de l'absence de structure continue externe dans le document FR-A-2 221 679 et à cause de l'épaisseur réduite du manchon et de l'emplacement relativement extérieur du fil dans le document EP-A-0303 909.

La demande de brevet européen EP-A-0.086.359 propose de réaliser une rainure hélicoïdale dans la surface cylindrique interne d'un manchon en matière plastique préalablement fabriqué par exemple par moulage. La rainure est formée dans la surface cylindrique interne par une tête de découpe rotative munie d'un couteau.

Le fil chauffant est ensuite introduit dans la rainure ainsi formée et mis en place librement au fond de la rainure, cette dernière étant finalement partiellement refermée par pressage de la matière plastique environnante.

Dans ce document cité, la position radiale du fil par rapport à la surface cylindrique interne n'est pas précise puisqu'il est possible qu'il ne soit pas maintenu complètement en appui dans le fond de la rainure. De plus, le procédé décrit prévoit qu'une partie de la surface externe du fil reste libre de toute matière d'enrobage ce qui rend impossible la réalisation d'un manchon dans lequel le fil chauffant serait en affleurement de la surface cylindrique interne. Un manchon ainsi réalisé pose des problèmes de stockage puisque le fil reste au contact de l'air ambiant de l'atelier et qu'une contamination par l'air pollué peut nécessiter un nettoyage du manchon avant son utilisation pour une opération de soudage.

La mise en place du fil chauffant dans une rainure intérieure par rabattement de la matière plastique en vue de ne l'enrober que partiellement ne permet pas non plus de contrôler de manière efficace l'ancrage du fil dans la matière plastique au cours de l'enroulement et à l'issue de l'opération de rabattement.

La présente invention a pour but de remédier à ces inconvénients et de fabriquer un manchon électro-soudable qui puisse être utilisé, seul sans surmoulage, par exemple en temps que manchon électro-soudable d'utilité courante notamment pour le raccord de canalisations d'eau ou, avec surmoulage, en temps que raccord électro-soudable, notamment pour des canalisations de gaz.

Dans ce but, l'invention propose un procédé de fabrication d'un manchon en matière plastique pourvu d'un fil chauffant et destiné à réaliser un raccord d'électro-soudage, procédé au cours duquel :
- la manchon est moulé selon une forme cylindrique délimitée par une surface extérieure et une surface intérieure,
- une rainure hélicoïdale est réalisée dans l'une des deux surfaces du manchon,
- un fil est mis en place dans la rainure,
- la matière plastique est rabattue pour enrober au moins partiellement le fil, caractérisé en ce que :
- la rainure hélicoïdale est réalisée dans la surface cylindrique extérieure du manchon,
- le fil est chauffé préalablement à sa mise en place dans le fond de la rainure, et
- la matière plastique, chauffée par l'intermédiaire du fil, est rabattue pour enrober totalement le fil et refermer la rainure.

Pour ce faire, la présente invention préconise le moulage d'un manchon en matière plastique, la réalisation d'une rainure hélicoïdale, la mise en place au fond de cette rainure d'un fil chauffé qui vient donc s'y ancrer et le rabattement de la matière plastique ramollie sur le fil, la rainure étant alors refermée et la surface extérieure du manchon relissée.

Ainsi, par son enfoncement dans le fond de la rainure, le fil peut venir tangenter la face intérieure du manchon préalablement place sur un noyau. On utilise donc les propriétés intrinsèques du fil pour l'intégrer dans le manchon.

Les avantages obtenus grâce à cette invention sont nombreux. Tout d'abord le fil est positionné à proximité de la surface intérieure du manchon, et peut même tangenter cette surface, ce qui permet une soudure de qualité aux surfaces de contact des éléments raccordés. Dans ce cas, la rainure est de profondeur proche de l'épaisseur du manchon.

Le fil est mis en place de façon précise selon un pas déterminé de la rainure hélicoïdale, ce qui permet une soudure homogène et évite que deux tronçons du fil ne fassent contact et ne créent un court-circuit lors de l'opération de soudure.

Le fil chauffé est ancré dans la matière plastique en cours d'enroulement et totalement enrobé après rabattement de la matière, grâce à la fusion en profondeur de celle-ci. La mise en place du fil est donc très précise et le fil ne peut se déplacer ni avant ni pendant le surmoulage éventuel et l'on obtient un manchon fiable.

Les problèmes de sous-tension ou de sur-tension du fil ne se posent plus, puisque son positionnement et son ancrage sont aidés par son chauffage au préalable.

De plus, grâce à l'invention, les risques de contamination ou d'encrassement du manchon stocké sont supprimés.

Comme il a été indiqué plus haut, l'ancrage en profondeur du fil résistant permet la réalisation de manchons d'électro-soudage ne nécessitant pas systématiquement de surmoulage. Dans ce dernier cas, le manchon est moulé directement avec des parties destinées à constituer des bornes de branchement.

Enfin, le procédé conforme à l'invention permet également la fabrication de manchons électro-soudables de diamètre variable par exemple de manchons destinés à raccorder deux canalisations de diamètre différent.

L'invention concerne également un dispositif pour la mise en oeuvre du procédé et les utilisations préférées du manchon ainsi réalisé.

Le dispositif pour la mise en oeuvre du procédé selon l'invention, est remarquable en ce qu'il comporte un dispositif d'entraînement en rotation du manchon actionné par un moteur, une tête de chauffage du fil pourvu d'une pointe de coupe et située à l'extérieur du manchon, cette tête étant guidée en translation par un dispositif d'entraînement en translation actionné par le même moteur et alimenté en fil par un dispositif d'alimentation en fil actionné par moteur.

L'invention est exposée ci-après plus en détails à l'aide de dessins représentant seulement un mode d'exécution.
- La figure 1 représente une vue schématique du dispositif de mise en oeuvre du procédé,
- la figure 2 représente un mode d'agencement de la pointe de coupe et du dispositif de rabattement de la matière plastique, en vue transversale par rapport au manchon,
- la figure 3 est une vue à plus grande échelle, de face, de la pointe de coupe,
- la figure 4 représente un manchon moulé avant la mise en oeuvre du procédé,
- la figure 5 représente un manchon d'électro-soudage réalisé par la mise en oeuvre du procédé.

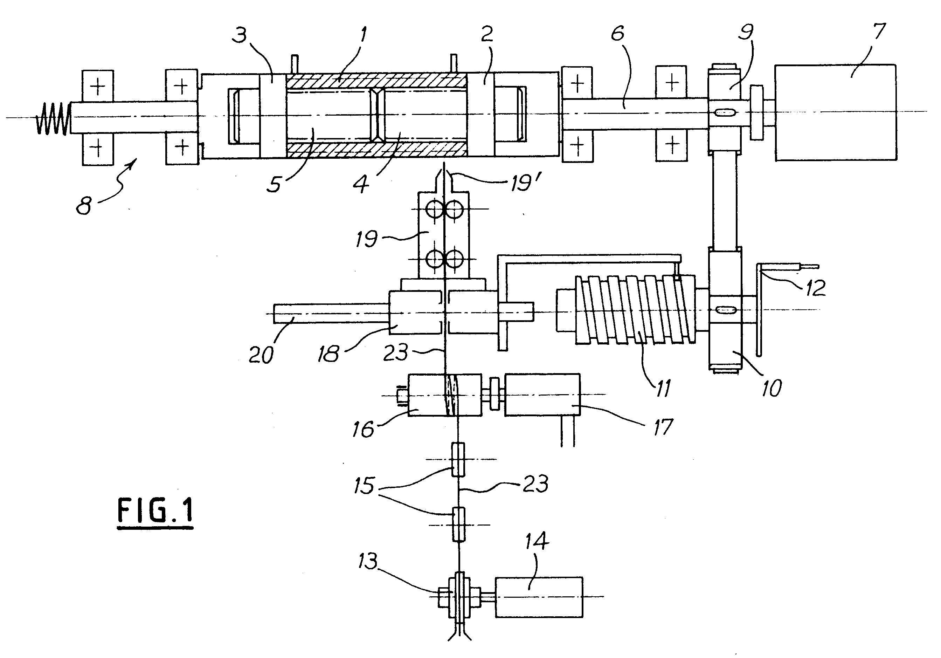

La figure 1 représente un dispositif de mise en oeuvre du procédé déjà décrit.

Le manchon moulé, de préférence par injection, est mis en place entre deux centreurs, un centreur d'entraînement à griffes 2 et un centreur fou 3. Chacun de ces centreurs comporte un noyau extensible, le noyau 4 étant monté au travers du centreur 2 et le noyau 5 étant monté au travers du centreur 3. Le centreur d'entraînement 2 est monté relié en rotation grâce à une liaison par griffes à l'extrémité d'une broche 6 montée sur des paliers, en particulier des roulements à billes et l'autre extrémité de la broche 6 est reliée en rotation à un moteur d'entraînement 7. Le centreur fou 3 est, quant à lui, monté sur une contre-pointe escamotable 8 également supportée par des paliers de rotation, en particulier des roulements à billes.

L'extrémité de la broche 6 de liaison avec le moteur d'entraînement 7 supporte une poulie dentée 9 reliée par courroie à une autre poulie dentée 10 montée reliée en rotation sur le dispositif de guidage en translation 11. Ce dispositif d'entraînement en translation 11 est constitué de préférence d'un cylindre pourvu d'une rainure périphérique hélicoïdale, formant une came à pas déterminé. Ce cylindre 11 est supporté par un axe fixé en rotation sur la poulie dentée 10 et sur l'extrémité de cet axe dépassant de la poulie 10 est montée une roue compte tours 12.

Le dispositif d'alimentation du fil est constitue d'un dévidoir 13 entraîné par un moteur 14 H. Le fil passe ensuite sur deux galets 15 afin de former un brin mou, il est ensuite enroulé sur un tambour tendeur 16 relié à un frein réglable 17. Puis le fil est introduit dans une tête de chauffage 19 montée sur un chariot 18. Ce chariot 18 coulisse sur un arbre 20 fixe en rotation. La translation du chariot 18 sur l'arbre 20 est commandée par un système de bras et de tenon de guidage coopérant avec la rainure hélicoïdale de la came 11.

En fonctionnement, le manchon est tout d'abord placé sur les noyaux 5 et 4 des centreurs 2 et 3 qui sont quant à eux fixés sur la pointe d'entraînement et sur la contre-pointe escamotable 8. La profondeur de la rainure est réglée par translation de la tête 19 ce qui entraîne l'amorçage de la rainure, de préférence de section triangulaire, par la pointe de coupe 19′ de la tête de chauffage 19 ; les moteurs 7 et 14 sont actionnés, entraînant simultanément la rotation du manchon 1, la translation de la tête 19 et l'alimentation en fil.

Le dispositif peut s'adapter à tous types de manchon par un jeu de centreurs et de cames adaptés aux différents types de manchon à réaliser.

Par des noyaux de diamètres différents et par une commande spécifique du déplacement de la tête de chauffage 19, il est également possible d'opérer sur des manchons de diamètre variable.

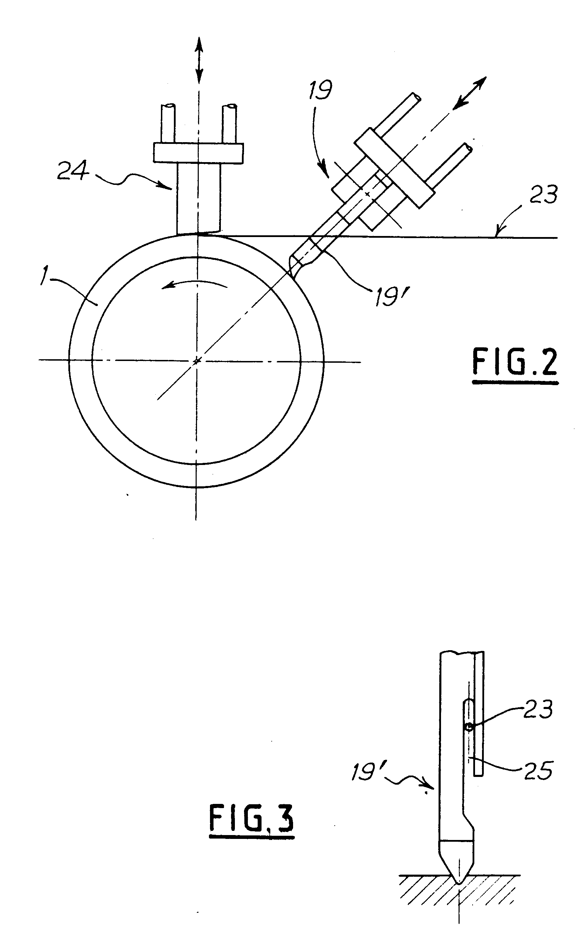

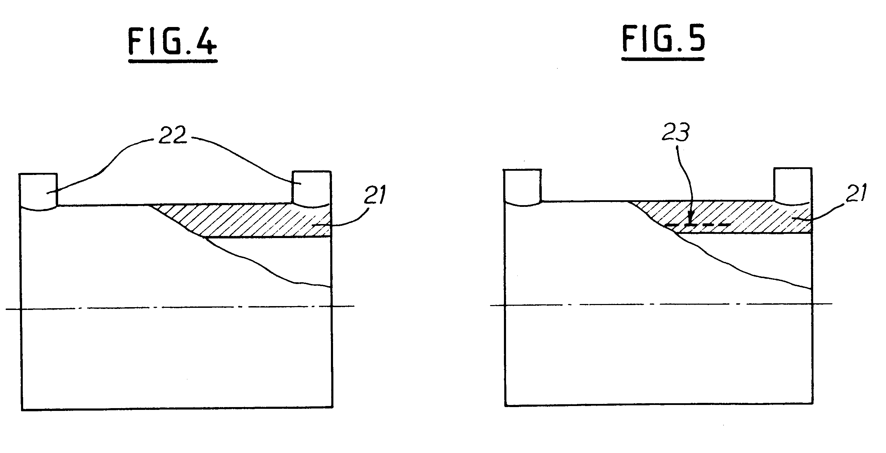

Les figures 2 et 3 représentent plus en détail un agencement de la pointe de coupe 19, et d'un dispositif de rabattement 24 de la matière plastique ramollie.

La pointe de coupe 19′ est montée radialement à environ 45° par rapport à la direction radiale du dispositif 24. Le fil chauffé 23 est, quant à lui, tendu tangentiellement au point supérieur du manchon 1, point où est disposé le dispositif de rabattement 24 de la matière ramollie.

Le fil 23 est guidé par une fente 25 prévue dans la pointe de coupe 19′, afin de rester dans la direction radiale de la rainure déjà réalisée par la pointe de coupe 19′.

Le dispositif de rabattement 24 de la matière plastique ramollie est constitué d'un patin escamotable en téflon.

Le patin 24, tout comme la pointe de coupe 19′, sont bien évidemment mobiles radialement en translation longitudinale, comme le représentent les doubles flêches de la figure 2, afin d'une part de pouvoir être escamotés et d'autre part de venir en fonction de façon réglable.

Il est également possible de réaliser le procédé conforme à l'invention sans patin 24. En effet, la matière peut se rabattre d'elle-même pour refermer la rainure grâce à ses propriétés intrinsèques, à savoir par mémoire elle est capable de reprendre par simple plasticité sa forme originale.

La figure 4 représente un manchon, avant la mise en place du fil chauffant. Ce manchon est destiné à être utilisé seul, sans partie de surmoulage.

Il se compose donc d'un cylindre 21 creux d'épaisseur relativement importante et de deux parties 22 protubérantes destinées à la formation des bornes de branchement.

La figure 5 représente le même manchon équipé de son fil chauffant 23 par la mise en oeuvre du procédé conforme à l'invention. Le fil 23 se trouve à proximité de la surface intérieure du cylindre 21 et peut même, par simple réglage de la profondeur de rainure réalisée grâce au dispositif décrit ci-dessus, se trouver en affleurement avec cette surface intérieure.

Ce type de manchon est destiné plus particulièrement à être utilisé en tant que manchon d'utilité courante notamment pour le raccord de canalisations d'eau.

Le procédé conforme à l'invention ainsi que son dispositif de mise en oeuvre peuvent être également utilisés pour former des manchons destinés à être utilisés en tant qu'insert d'électro-soudage, la partie externe du raccord étant réalisée par surmoulage autour de cet insert.

Ce type de manchon est en particulier destiné à la réalisation de raccord électro-soudable pour canalisations de gaz.

## Revendications

1. Procédé de fabrication d'un manchon (1) en matière plastique pourvu d'un fil chauffant (23) et destiné à réaliser un raccord d'électro-soudage, procédé au cours duquel :
- le manchon est moulé selon une forme cylindrique délimitée par une surface extérieure et une surface intérieure ;
- une rainure hélicoïdale est réalisée dans l'une des deux surfaces du manchon,
- un fil est mis en place dans la rainure,
- la matière plastique est rabattue pour enrober au moins partiellement le fil, caractérisé en ce que :
- la rainure hélicoïdale est réalisée dans la surface cylindrique extérieure du manchon ;
- le fil est chauffé préalablement à sa mise en place dans le fond de la rainure ; et
- la matière plastique, chauffée par l'intermédiaire du fil, est rabattue pour enrober totalement le fil et refermer la rainure.

2. Procédé selon la revendication 1, caractérisé en ce que la profondeur de la rainure est sensiblement égale à l'épaisseur du manchon.

3. Procédé selon la revendication 1 ou 2, caractérisé en ce que la section de la rainure est de forme triangulaire.

4. Procédé selon la revendication 1, caractérisé en ce que la matière plastique se rabat d'elle-même par mémoire de forme.

5. Procédé selon la revendication 1 caractérisé en ce que la matière plastique est rabattue grâce à un dispositif de rabattement (24).

6. Dispositif pour la mise en oeuvre du procédé selon l'une quelconque des revendications 1 à 5, comportant un dispositif d'entraînement en rotation du manchon (1) actionné par un moteur (7) et un outil (19) guidé en translation par un dispositif d'entraînement en translation actionné par le même moteur (7) caractérisé en ce que l'outil est une tête de chauffage (19) du fil (23) pourvue d'une pointe de coupe (19') située à l'extérieur du manchon (1) et alimentée en fil par un dispositif d'alimentation en fil (23) actionné par un moteur (14).

7. Dispositif selon la revendication 6, caractérisé en ce que le dispositif d'alimentation en fil (23) est constitué d'un dévidoir (13) actionné par le moteur (14), de galets (15) et d'un tambour tendeur (16) pourvu d'un frein réglable (17).

8. Dispositif selon la revendication 6 ou 7, caractérisé en ce que le dispositif d'entraînement en rotation est constitué d'une pointe d'entraînement actionnée par le moteur (7), d'une contre-pointe escamotable (8) et de deux centreurs (2 et 3) pourvus de noyaux extensibles (4 et 5), l'un des centreur (2) étant relié en rotation par un système de griffes avec le moteur (7) et l'autre centreur (3) étant monté fou en rotation.

9. Dispositif selon la revendication 6, 7 ou 8, caractérisé en ce que le dispositif d'entraînement en translation est constitué d'un axe relié en rotation au moteur (7) par l'intermédiaire de poulies dentées (9 et 10) et d'une courroie, cette axe supportant une roue compte tours (12) et un cylindre came (11) pourvu d'une rainure hélicoïdale, coopérant avec un tenon de guidage relié par un système de bras à un chariot (18) monté coulissant sur un arbre (20) et supportant la tête de chauffage (19).

10. Dispositif selon l'une quelconque des revendications 6 à 9, caractérisé en ce qu'il comporte un dispositif de rabattement de la matière plastique ramollie (24) constitué d'un patin escamotable en téflon.

11. Raccord d'électro-soudage caractérisé en ce qu'il est constitué d'un manchon pourvu de parties de borne de branchement réalisé selon l'une quelconque des revendications 1 à 5.

12. Insert destiné à être surmoulé pour former un raccord d'électro-soudage, caractérisé en ce qu'il est réalisé selon l'une quelconque des revendications 1 à 5.

## Claims

1. Process for manufacturing a plastics sleeve (1) provided with a heating wire (23) and intended to produce an electro-fusible connection, wherein:
the sleeve is moulded into a cylindrical shape defined by an outer surface and an inner surface;
a helical groove is provided in one of the two surfaces of the sleeve,
a wire is placed in the groove,
the plastics material is folded round in order to encase the wire at least partially,
characterised in that:
the helical groove is formed in the outer cylindrical surface of the sleeve;
the wire is heated before being placed in the base of the groove; and
the plastics material, heated by the wire, is folded round so as to encase the wire completely and close off the groove.

2. Process according to claim 1, characterised in that the depth of the groove is substantially equal to the thickness of the sleeve.

3. Process according to claim 1 or 2, characterised in that the groove is triangular in cross section.

4. Process according to claim 1, characterised in that the plastics material folds back on itself automatically as a result of shape memory.

5. Process according to claim 1, characterised in that the plastics material is folded back by means of a folding device (24).

6. Apparatus for carrying out the process according to any one of claims 1 to 5, comprising a device for rotationally driving the sleeve (1), actuated by a motor (7) and a tool (19) translationally guided by a translational driving device actuated by the same motor (7), characterised in that the tool is a head (19) for heating the wire (23), equipped with a cutting tip (19') located on the outside of the sleeve (1) and supplied with wire by a wire supplying device (23) operated by a motor (14).

7. Apparatus according to claim 6, characterised in that the wire supplying device (23) consists of a reel (13) operated by the motor (14), rollers (15) and a tensioning drum (16) provided with an adjustable brake (17).

8. Apparatus according to claim 6 or 7, characterised in that the rotational driving device consists of a driving tip operated by the motor (7), a retractable counter-tip (8) and two centring means (2 and 3) provided with extensible cores (4 and 5), one of the centring means (2) being rotationally connected to the motor (7) by a system of claws and the other centring means (3) being eccentrically rotationally mounted.

9. Apparatus according to claim 6, 7 or 8, characterised in that the translational driving device consists of a spindle rotationally connected to the motor (7) via serrated pulleys (9 and 10) and a strap, this spindle supporting a revolution-counting wheel (12) and a cam cylinder (11) provided with a helical groove, cooperating with a guide tenon connected, by a system of arms, to a carriage (18) slidably mounted on a shaft (20) and supporting the heating head (19).

10. Apparatus according to any one of claims 6 to 9, characterised in that it comprises a device for folding the softened plastics (24), consisting of a retractable Teflon ® shoe.

11. Electro-fusible connection, characterised in that it consists of a sleeve provided with terminal connecting portions, produced according to any one of claims 1 to 5.

12. Insert intended to be over-moulded in order to form an electro-fusible connection, characterised in that it is produced acording to any one of claims 1 to 5.

## Patentansprüche

1. Verfahren zur Herstellung einer Muffe (1) aus Kunststoffmaterial, welche mit einem Heizdraht (23) versehen ist und bestimmungsgemäß zur Herstellung einer Elektroschweißverbindung einsetzbar ist, bei welchem folgendes vorgesehen ist:
- Die Muffe wird gemäß einer zylindrischen Gestalt geformt, welche eine Außenfläche und eine Innenfläche umfaßt;
- eine spiralförmige Nut wird in einer der beiden Flächen der Muffe vorgesehen,
- ein Draht wird in die Nut eingelegt,
- das Kunststoffmaterial wird umgeformt, um wenigstens teilweise den Draht zu umhüllen,
**dadurch gekennzeichnet**, daß:
- die spiralförmige Nut in der zylindrischen Außenfläche der Muffe vorgesehen wird;
- der Draht vor dem Einlegen auf dem Grund der Nut vorgewärmt wird; und
- das Kunststoffmaterial, welches mittels des Drahts erwärmt worden ist, umgeformt wird, um den Draht vollständig zu umgeben und die Nut wieder zu schließen.

2. Verfahren nach Anspruch 1, **dadurch gekennzeichnet**, daß die Tiefe der Nut im wesentlichen gleich der Dicke der Muffe ist.

3. Verfahren nach Anspruch 1 oder 2, **dadurch gekennzeichnet**, daß der Querschnitt der Nut dreieckförmig gestaltet ist.

4. Verfahren nach Anspruch 1, **dadurch gekennzeichnet**, daß das Kunststoffmaterial sich selbst aufgrund seines Formerinnerungsvermögens zurückstellt.

5. Verfahren nach Anspruch 1, **dadurch gekennzeichnet**, daß das Kunststoffmaterial dank einer Umformeinrichtung (24) umgeformt wird.

6. Vorrichtung zur Durchführung des Verfahrens nach einem der Ansprüche 1 bis 5, welche eine Einrichtung zum Drehantreiben der Muffe (1) aufweist, welche einen Motor (7) und ein Werkzeug (19) umfaßt, welches translatorisch durch eine translatorische Antriebseinrichtung geführt ist, welche den gleichen Motor (7) umfaßt, **dadurch gekennzeichnet**, daß das Werkzeug einen Heizkopf (19) für den Draht (23) ist, welcher mit einer Schneidspitze (19') versehen ist, welche außerhalb der Muffe (1) liegt, und das mit Draht durch eine Zufuhreinrichtung für den Draht (23) versorgbar ist, welche mittels eines Motors (14) angetrieben ist.

7. Vorrichtung nach Anspruch 6, **dadurch gekennzeichnet**, daß die Zufuhreinrichtung für den Draht (23) von einer Haspel (13) gebildet wird, welche durch den Motor (14) angetrieben wird, sowie von Rollen (15) und einer Spanntrommel (16) gebildet wird, welche mit einer regelbaren Bremse (17) versehen ist.

8. Vorrichtung nach Anspruch 6 oder 7, **dadurch gekennzeichnet**, daß die Drehantriebseinrichtung von einer Antriebsspitze gebildet wird, welche durch den Motor (7) angetrieben ist, sowie von einer einziehbaren Gegenspitze (8) und zwei Zentriereinrichtungen (2 und 3), welche mit dehnbaren Schichten (4 und 5) versehen sind, wobei eine der Zentriereinrichtungen (2) drehbar durch eine Aufnahmeeinrichtung mit dem Motor (7) verbunden ist und die andere Zentriereinrichtung (3) sich lose drehend ausgelegt ist.

9. Vorrichtung nach Anspruch 6, 7 oder 8, **dadurch gekennzeichnet**, daß die translatorische Antriebseinrichtung von einer Achse gebildet wird, welche drehbar mit einem Motor (7) unter Zwischenschaltung von Zahnscheiben (9 und 10) verbunden ist, sowie von einem Riemen, wobei die Achse ein Umdrehungszählrad (12) und eine zylindrische Nocke (11) trägt, welche mit einer spiralförmigen Ausnehmung versehen ist, und mit einem Führungsstift zusammenarbeitet, welches durch eine Armanordnung mit einem Schlitten (18) verbunden ist, welcher gleitbeweglich auf einer Welle (20) angeordnet ist und den Heizkopf (19) trägt.

10. Vorrichtung nach einem der Ansprüche 6 bis 9, **dadurch gekennzeichnet**, daß sie eine Umformeinrichtung (24) für das erweichte Kunststoffmaterial aufweist, welche von einer einziehbaren Backe aus Teflon gebildet wird.

11. Elektroschweißverbindung, **dadurch gekennzeichnet**, daß sie von einer Muffe gebildet wird, welche mit Anschlußverzweigungen versehen ist, und die nach einem der Ansprüche 1 bis 5 hergestellt ist.

12. Einsatz, welcher zur Bildung einer Elektroschweißverbindung geformt ist, **dadurch gekennzeichnet**, daß er nach einem der Ansprüche 1 bis 5 hergestellt ist.
